Europäisches Patentamt

European Patent Office

Office européen des brevets

(11) Publication number: **0 409 335 A1**

## EUROPEAN PATENT APPLICATION

(21) Application number: 90201919.9

(22) Date of filing: 16.07.90

(51) Int. Cl.5: **A47J 43/046**

(30) Priority: 21.07.89 NL 8901888

(43) Date of publication of application:
23.01.91 Bulletin 91/04

(84) Designated Contracting States:
AT DE ES FR GB

(71) Applicant: **N.V. Philips' Gloeilampenfabrieken**
Groenewoudseweg 1
NL-5621 BA Eindhoven(NL)

(72) Inventor: **Mugge, Jan**
c/o INT. OCTROOIBUREAU B.V., Prof.
Holstlaan 6
NL-5656 AA Eindhoven(NL)
Inventor: **Groothuis, Gerrit Jan**
c/o INT. OCTROOIBUREAU B.V., Prof.
Holstlaan 6
NL-5656 AA Eindhoven(NL)

(74) Representative: **Bos, Kornelis Sjoerd et al**
INTERNATIONAAL OCTROOIBUREAU B.V.
Prof. Holstlaan 6
NL-5656 AA Eindhoven(NL)

(54) Bearing for the drive shaft of a food processor.

(57) The invention relates to a food processor comprising a housing 1 in which a motor 2 is accommodated, a bowl 3 which can be connected to the housing so as to be detachable, a cover 4 having a feeding tube 5, a driving shaft 6 which is driven by the motor a transmission mechanism and which projects upwards both through an aperture 9 in the housing and through an aperture 10 in a bottom of the bowl, the said driving shaft being formed by an upper shaft 11 and a lower shaft 12 which are connected together by means of a coupling 19, the upper shaft 11 being journalled in the cover 4 and being suitable for connecting a tool thereto, the lower shaft 12 being journalled in a frame plate by means of a bearing 17, the frame plate being suspended in the housing. In order to reduce the bearing forces the coupling between the upper driving shaft 11 and the lower driving shaft 12 is situated near the bottom of the bowl 3, directly outside the housing 1.

FIG.2

## BEARING FOR A DRIVING SHAFT OF A FOOD PROCESSOR.

The invention relates to a food processor comprising a housing in which a motor is accommodated, a bowl which can be connected on the housing so as to be detachable and which comprises a cover having a feeding tube, a driving shaft which is driven by the motor via a transmission mechanism and which projects upwards both through an aperture in the housing and through an aperture in a bottom of the bowl, the driving shaft being formed by an upper shaft and a lower shaft which are connected together by means of a coupling, the upper shaft being journalled in the cover and being suitable for connecting a tool thereto, the lower shaft being journalled in a frame plate by means of a bearing.

Such a food processor is known from EP-A-0 158 032. This food processor is shown diagrammatically in Fig. 1. The food processor is constructed from a housing 1 consisting of two housing parts 1a and 1b, a motor 2, a bowl 3 which can be placed on the housing part 1a so as to be detachable and can be closed by means of a cover 4 which has a feeding tube 5. A driving shaft 6 is driven by the motor shaft 8 via a transmission mechanism, for example, a belt transmission 7. The driving shaft projects upwards both through an aperture 9 in the housing part 1a and through an aperture 10 in the bottom of the bowl 3a and is formed by an upper shaft 11 and a lower shaft 12. The latter comprises a metal shaft 12a and an electrically insulated sleeve 12b which is rigidly connected to the metal shaft 12a. The upper shaft 11, also termed adapter, is suitable for connecting a tool thereto, for example, a cutter 13 (in the upper part in the bowl) or a sickle-shaped knife not shown (in the lower part in the bowl). The cover 4 comprises a bearing 14 for journalling the upper shaft 11. The housing comprises a frame plate 15 which is suspended between the housing parts 1a and 1b by means of resilient elements 16. The frame plate 15 comprises a bearing 17 for journalling the lower shaft 12. The frame plate comprises a bridge-like reinforcing element 18 for extra support of the bearing 17. The motor 2 is connected to the frame plate. In such a known food processor the upper shaft 11 is connected to the lower shaft 12 by means of a coupling 19. The coupling between the shafts occurs in the upper part in the bowl, that is to say at a large distance from the bearing 17.

During operation of the food processor, forces are exterted on the shafts 11 and 12 as will be described hereinafter. Let it be assumed that a cutter 13 is placed on the upper shaft 11.

During cutting, a force P is exerted on the cutter as a result of which a bending moment $P.a$ occurs on the upper shaft 11, being the distance of the force P to the driving shaft. As a result of this a bearing force $D_{L1}$ of a value $\frac{a}{b1} \cdot P$ occurs on this upper shaft, b1 being the length of the upper shaft 11 measured from the bearing 14 to the place 12 c where the force of the upper shaft 11 is transferred to the lower shaft 12. A force D1 equal to $D_{L1}$ hence is exerted on the lower shaft 12. Furthermore, the bearing forces L1 and L2 act on the lower shaft 12 near bearing 17. A rather large bending moment occurs on the lower shaft 12 because the distance c1 between the coupling place 12c where the force D1 is exerted and the bearing 17 is large. This large moment must be compensated by the bearing 17 so that said bearing must have a rigid and long construction. In fact the said bearing consists of two bearings. Moreover, as a result of this the frame plate 15 must also be rigid. Hence the reinforcing element 18 for the extra support of the bearing.

It is an object of the present invention to provide a food processor in which the load of the bearings is as small as possible.

According to the invention this is achieved in that the coupling between the upper driving shaft and the lower driving shaft is situated near the bottom of the bowl immediately outside the housing.

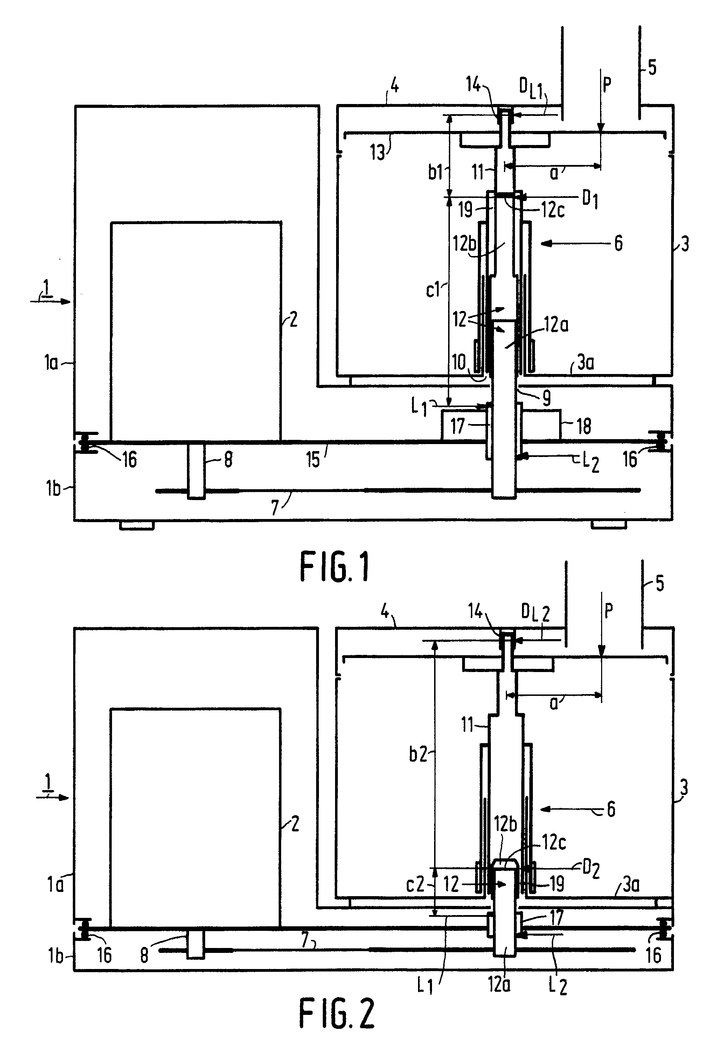

Fig. 2 is a diagrammatic view of the food processor according to the invention. Like components are referred to by like reference numerals. A bearing force DL2 of a value of $\frac{a}{b2} \cdot P$ is now exerted on the upper shaft 11. Because b2 is larger than the force $D_{L2}$ is smaller than $D_{L1}$. The distance between the coupling place 12c where force D2 engages and the bearing 17 is now much smaller. The resulting bending moment on the lower shaft 12 has become much smaller because both the force D2 and the distance c2 are smaller. Both the bearing 14 and the bearing 17 are now loaded to a much smaller extent. The great advantage hereof is that especially the bearing 17 may be comparatively small and the frame plate 15 may be manufactured from thin sheet material. The food processor according to the invention can hence be manufactured much cheaper and/or the 1 ife may be extended.

## Claims

1. A food processor comprising a housing 1 in which a motor 2 is accommodated, a bowl 3 which can be connected to the housing so as to be detachable, a cover 4 having a feeding tube 5, a driving shaft 6 which is driven by the motor a transmission mechanism and which projects upwards both through an aperture 9 in the housing and through an aperture 10 in a bottom of the bowl, the said driving shaft being formed by an upper shaft 11 and a lower shaft 12 which are connected together by means of a coupling 19, the upper shaft 11 being journalled in the cover 4 and being suitable for connecting a tool thereto, and the lower shaft 12 being journalled in a frame plate 15 by means of a bearing 17, said frame plate being suspended in the housing,
characterized in that the coupling 19 between the upper driving shaft 11 and the lower driving shaft 12 is situated near the bottom 3a of the bowl 3, directly outside the housing 1.

2. A food processor as claimed in Claim 1, characterized in that the bearing 17 is small in the axial direction and the frame plate is manufactured from thin sheet material.

FIG.1

FIG.2

European
Patent Office

**EUROPEAN SEARCH
REPORT**

Application Number

**EP 90 20 1919**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 345 974 (ZYLISS ZYSSET AG) <br> * Page 6, line 5 - page 9, line 19; figures 1,3,5 * <br> — — — | 1 | A 47 J 43/046 |
| D,A | EP-A-0 158 032 (ROBERT KRUPS STIFTUNG & CO.) <br> * Page 16, line 1 - page 17, line 25; figures 1,4,11 * <br> — — — | 1 | |
| A | FR-A-2 486 385 (MATSUSHITA ELECTRIC INDUSTRIAL CO., LD) <br> * Page 3, line 17 - page 4, line 5; figure 1 * <br> — — — | 1,2 | |
| A | FR-A-2 358 576 (ROBOT COUPE S.A.) <br> * Page 3, lines 2-20; figure 5 * <br> — — — | 1 | |
| A | EP-A-0 100 755 (CAVALLI) <br> * Page 1, line 2 - page 6, line 3; figure 1 * <br> — — — — — | 1 | |
| | | | **TECHNICAL FIELDS SEARCHED (Int. Cl.5)** |
| | | | A 47 J |

The present search report has been drawn up for all claims

| Place of search | Date of completion of search | Examiner |
|---|---|---|
| The Hague | 22 October 90 | BODART P.A. |